# EUROPEAN PATENT APPLICATION

(11) **EP 4 397 186 A1**
(43) Date of publication of application: **10.07.2024**
(21) Application number: 21955997.8
(22) Date of filing: 01.09.2021
(51) Int. Cl.: A23G 1/00

(54) **GROUND FOOD MATERIAL AND METHOD FOR MANUFACTURING SAME**

(71) Applicant: Hydro Powtech Japan Co., Ltd., Nagaoka-shi, Niigata 940-0877 (JP)
(72) Inventor: KUMAZAWA, Masazumi, Nagaoka-shi, Niigata 940-0877 (JP)
(74) Representative: Studio Torta S.p.A.
(86) International application number: PCT/JP2021/032205
(87) International publication number: WO 2023/032108

(57) **Abstract**

An another object of the present invention is to provide a method capable of easily producing a ground processed food material. The ground processed food material of cacao and / or cacao processed product of the present invention is characterized in that the material is an extruder-processed ground product of cacao and / or cacao processed product, wherein the content of general bacteria contained in the extruder-processed ground product is 3,000/g or less. Further, in a preferred embodiment of the ground processed food material of cacao and / or cacao processed product of the present invention, the average particle size of the non-oil and fat components of the extruder processed ground product is in the range of 100 to 300 pm.

## Description

### Technical Field

The present invention relates to a ground processed food material and a method of manufacturing the same, and particularly to a ground processed food material capable of manufacturing chocolate and a method of manufacturing the same.

### Background Art

Traditionally, chocolate is manufactured through a large number of steps. In other words, although there are some differences in the process, in general, chocolate is manufactured through numerous processes such as cacao bean raw material selection, roasting, separation, blending, grinding, mixing, atomization, refining, temperature control, filling, cooling, mold cutting, inspection/packaging, aging and the like. For example, in a chocolate manufacturing method that includes a process of mixing a compound containing a granular sweetener, a method of producing chocolate is known, which is characterized by mixing fresh cream and sugar, heating the mixture, and maintaining the mixture in a boiling state at a predetermined temperature or lower under normal pressure and stopping the heating when the sugar begins to recrystallize, then further adding sugar to the mixture and mixing, allowing the new mixture to cool and straining to form granules, and mixing the granules with other ingredients (for example, Patent Document 1).

### Prior art literature

### Patent literature

Patent literature 1 : JP-H4-079839 A

### Summary of Invention

### Problems to be resolved by the invention

However, in the prior art including Patent literature 1, as described above, many steps are required, so it takes about 2 to 3 days to finish from roasted cacao nibs as a raw material to chocolate before cooling and solidification. Furthermore, since each of the above-mentioned processes is a batch process, it is difficult to produce continuously. Further, chocolate and cacao mass produced through conventional processes usually contain a large amount of common viable bacteria, for example, 3,000 to several hundred thousand/g of common viable bacteria.

Therefore, the present invention was made in view of the above-mentioned problems, and its purpose is to significantly shorten the manufacturing time by continuous production compared to batch-type production, and also to provide a ground processed food material that can reduce the amount of general viable bacteria as much as possible.

### Means of solving the problems

In order to achieve the above object, the present inventor conducted intensive studies on an extruder and its processing conditions, and as a result, discovered the present invention.

That is, a ground processed food material of cacao and / or cacao processed product of the present invention is characterized in that the material is an extruder-processed ground product of cacao and / or cacao processed product, wherein the content of general bacteria contained in the extruder-processed ground product is 3,000/g or less.

Further, in a preferred embodiment of the ground processed food material of cacao and / or cacao processed product of the present invention, it is characterized in that the average particle size of the non-oil and fat components of the extruder processed ground product is in the range of 100 to 300 pm.

Further, the extruder-processed ground product is characterized by continuously being fed to a wet pulverizer, and being pulverized to an average particle size of 20 pm or less, which does not feel rough when eaten by humans.

Furthermore, in a preferred embodiment of the ground processed food material of cacao and / or cacao processed product of the present invention, it is characterized in that the cacao and / or cacao processed product is at least one of cacao nibs, saccharides, powdered milk, plant-based milk powder substitutes, and vegetable oils and fats.

Furthermore, in a preferred embodiment of the ground processed food material of cacao and / or cacao processed product of the present invention, it is characterized in that the extruder-processed ground product of cacao and / or cacao processed product is liquid state or semi-solid state.

Furthermore, a food or drink product of the present invention is characterized by comprising the ground processed food material of cacao and / or cacao processed product of the present invention.

Furthermore, a method of manufacturing a ground processed food material of cacao and / or cacao processed product of the present invention is characterized in that the method comprises a step of grinding cacao and / or cacao processed product with an extruder (using an elongated flow / grinding element in an extruder) , and
a step of mixing the cacao and / or cacao processed product that have been subjected to the grinding process with saccharides, powdered milk or plant-based milk powder substitutes, and vegetable oils and fats by dispersing them in the extruder.

Furthermore, in a preferred embodiment of the method of manufacturing a ground processed food material of cacao and / or cacao processed product of the present invention, it is characterized in that the extruder is equipped with a screw (or a screw element) for performing elongated flow and grind, and also has a screw composed of screw elements that perform dispersion and mixing, and has 2 to 8 shafts with a multi-point feed mechanism.

In a preferred embodiment of the method of manufacturing a ground processed food material of cacao and / or cacao processed product of the present invention, it is characterized in that the method further comprises a step of pulverizing the mixture using a wet fine grinding mill.

In a preferred embodiment of the method of manufacturing a ground processed food material of cacao and / or cacao processed product of the present invention, it is characterized in that the method further comprises a step of adding at least one of whole milk powder, saccharides, or hydrolyzate derived from vegetable raw materials into the extruder.

Furthermore, the molded product of the present invention is characterized in that it is obtained by cooling and solidifying the melted cacao mass chocolate obtained by the method of the present invention.

Further, the chocolate powder of the present invention is characterized in that it is obtained by finely pulverizing the ground processed food material obtained by the method of the present invention, or obtained by finely pulverizing the molded product of the present invention.

### Effect of Invention

According to chocolate using the ground processed food material of the present invention, it has the advantageous effect of having a good texture because the particle size of the material contained in regular cacao mass that makes the texture unpleasant on the tongue is very fine. Further, according to the present invention, fats and oils (cocoa butter) are dispersed in the form of fine oil droplets within the cocoa mass, resulting in an advantageous effect of excellent solubility in the mouth. Furthermore, according to the present invention, it has the advantageous effect that the product of the present invention can be sterilized, although ordinary chocolate and cacao mass contain a large amount of common viable bacteria. Moreover, the manufacturing method of the present invention has the advantageous effect that it can be manufactured in an extremely short time, at low cost, and in a sanitary manner compared to existing manufacturing methods. Further, according to the present invention, by using a vegetable hydrolyzate instead of whole milk powder, there is an advantageous effect that milk allergen-free chocolate can be produced.

### Brief description of the drawings

[FIG. 1]

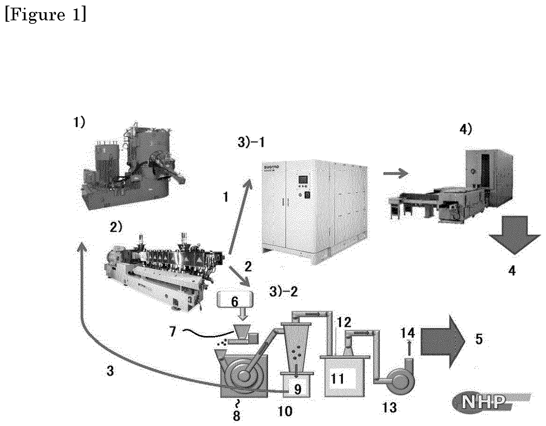

   FIG. 1 is a figure showing the steps of a method of producing a ground processed food material in one embodiment of the present invention.
[FIG. 2]

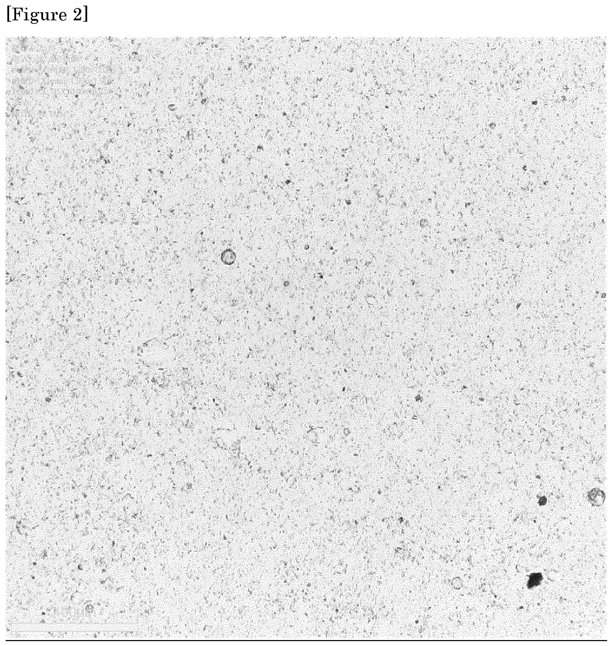

   FIG. 2 is a figure showing a microscopic photographed image (140 x magnification) of a ground processed (milled) food material (extruder processed and pulverized) in one embodiment of the present invention. Moreover, although it is difficult to read in the figure, the blank bar at the bottom left of the figure indicates a scale, and the length of the blank bar indicates 400 pm.
[FIG. 3]

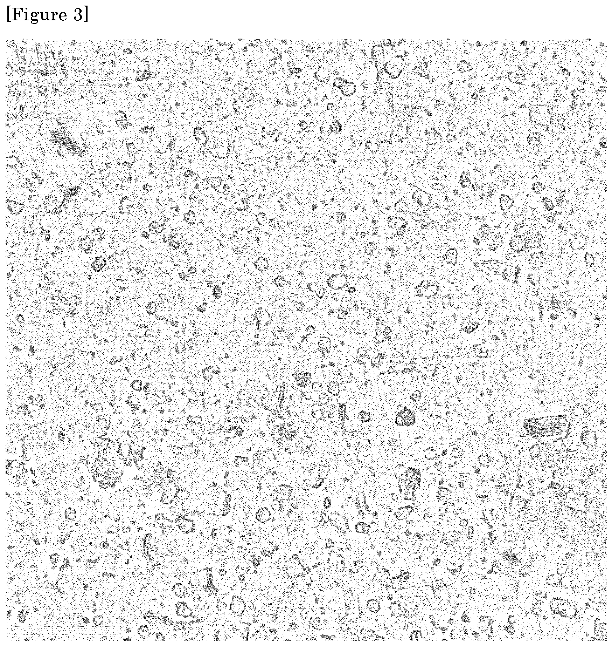

   FIG. 3 is a figure showing a microscopic image (1200 x magnification) of the ground processed food material (extruder processed and pulverized) in one embodiment of the present invention. Moreover, although it is difficult to read in the figure, the blank bar at the bottom left of the figure indicates a scale, and the length of the blank bar indicates 40 pm. Therefore, it can be seen that even large particles are at most 10 pm to 20 pm, and most particles are approximately 10 pm or less.
[FIG. 4]

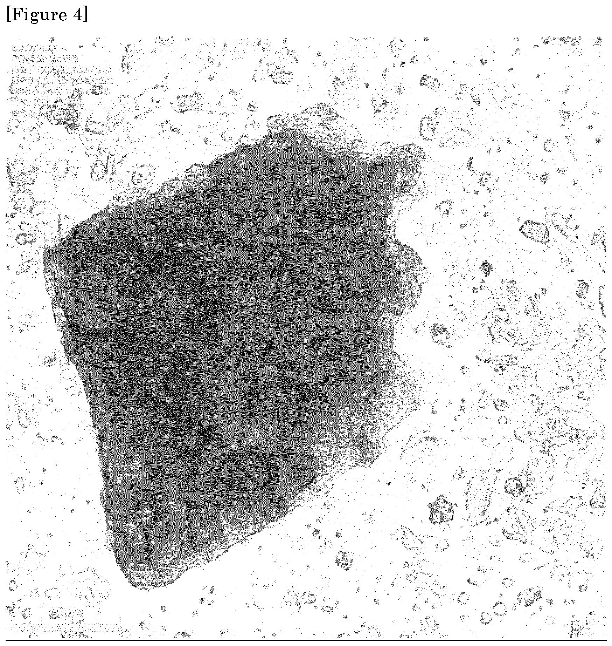

   FIG. 4 is a figure showing a microscope photographed image (1200 x magnification) of a commercially available chocolate product. Moreover, although it is difficult to read in the figure, the blank bar at the bottom left of the figure indicates a scale, and the length of the blank bar indicates 40 pm. Therefore, it can be seen that the width of the giant particles that appear large in the image is more than 120 pm.
[FIG. 5]

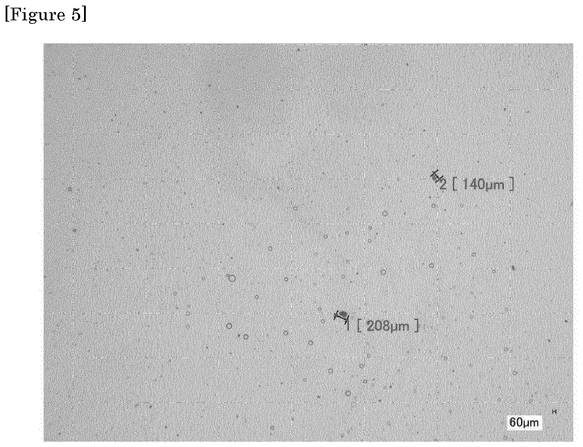

   FIG. 5 is a figure showing a microscope photographed image (30 x magnification) of chocolate using a ground processed food material according to an embodiment of the present invention. In the image, the countless slightly rounded objects are oil.
[FIG. 6]

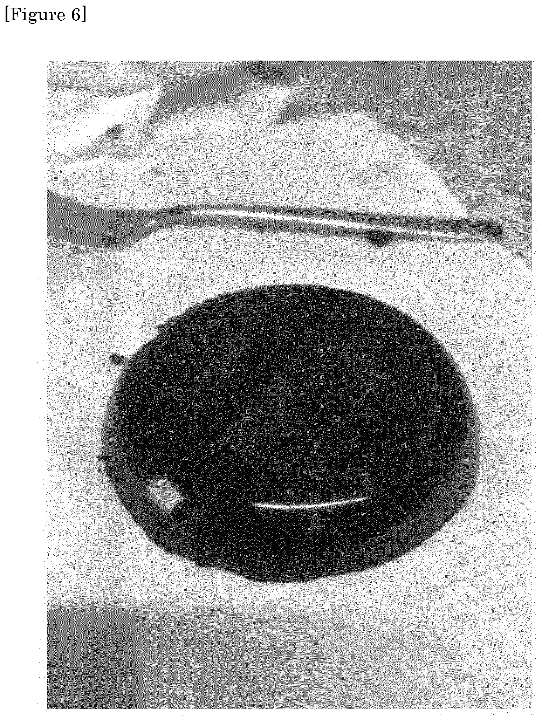

   FIG. 6 is a figure showing a photograph of chocolate using the ground processed food material in one embodiment of the present invention. In the image of FIG. 5, it can be seen that the countless slightly rounded objects are oil, and because this oil is moderately dispersed, the photograph of FIG. 6 has a very high gloss.

### Mode for Carrying Out the Invention

The ground processed food material of cacao and / or cacao processed product of the present invention is characterized in that the material is an extruder-processed ground product of cacao and / or cacao processed product, wherein the content of general bacteria contained in the extruder-processed ground product is 3,000/g or less. Although chocolate and cacao mass produced through conventional processes contain a large amount of general viable bacteria, for example, 3,000 to several hundred thousand/g of general viable bacteria, according to the extruder-treated ground product of the present invention, for example, by processing at an extruder cylinder temperature of 100 to 160°C, it is possible to create a ground processed (milled) food material in which the content of general bacteria contained in the extruder-treated milled product is 3,000/g or less.

Moreover, note that the raw material cacao beans that can be used in the present invention are not particularly limited. For example, as an example of cacao, mention may be made of those produced in Cote d'Ivoire, Ghana, Nigeria, and Cameroon on the African continent, those produced in Ecuador and Brazil in Central and South America, and those produced in Indonesia, Malaysia, and Vietnam in Southeast Asia and the like.

Furthermore, the processed cacao products that can be used in the present invention are not particularly limited. In a preferred embodiment of the ground processed food material of cacao and / or cacao processed product of the present invention, it is characterized in that the cacao and / or cacao processed product is at least one of cacao nibs, cacao mass, dark chocolate, white chocolate, and cocoa powder.

The cacao and the cacao processed product may be used alone, or two or more types may be used in combination.

Furthermore, the term "extruder-processed ground product" in the present invention can be a general term for food materials that can be added to foodstuffs as they are, dispersed / dissolved in liquids after addition, or incorporated into foods and drinks. Using the extruder-treated ground product, it is possible to produce, for example, chocolate, cocoa powder, and chocolate powder which contain powdered milk, or chocolate cocoa powder, and chocolate powder which do not contain powdered milk etc.

Further, in a preferred embodiment of the ground processed food material of cacao and / or cacao processed product of the present invention, it is characterized in that the average particle size of the extruder-processed ground product is in a range of 100 to 300 pm, from the viewpoint of ensuring a particle size that can be processed into a wet pulverizer in the next step.

Furthermore, in a preferred embodiment of the ground processed food material of cacao and / or cacao processed product of the present invention, it is characterized in that the extruder-processed ground product of cacao and / or cacao processed product is liquid state or semi-solid state. Although not particularly limited, in a preferred embodiment, from the viewpoint of ensuring fluidity supply to the wet pulverizer in the next step, by using the extruder-processed ground product of the liquid state cacao and / or the cacao processed product as the starting material, it is possible to produce chocolate. Further, although not particularly limited, in a preferred embodiment, from the viewpoint of preventing adhesion to the inner surface in an air flow mill, by using the extruder-processed ground product of the semi-solid state cacao and / or the cacao processed product as the starting material, it is possible to produce chocolate powder.

Furthermore, the food and drink products of the present invention are characterized by containing the ground processed food material of cacao and/or cacao processed products of the present invention. As the food and drink products, mention may be made of chocolate, cocoa powder, and chocolate powder which contain powdered milk, and chocolate, cocoa powder, and chocolate powder that do not contain milk powder. The ground processed (milled) food material of the present invention has a general bacteria content of 3,000 / g or less, and has the advantageous effect of providing food and drink products with a considerably reduced number of bacteria. The content of the ground processed (milled) food material of the present invention is not particularly limited, and the content determined by a conventional method can be applied.

Next, the method for manufacturing the ground processed (milled) food material of the present invention will be explained. First, a conventional chocolate manufacturing method will be explained. Conventionally, chocolate is produced through a fairly long process such as (1) Raw material acquisition, (2) Sorting process, (3) Roasting process, (4) Separation process, (5) Blending process, (6) Grinding process, (7) Mixing process, (8) Pulverization process, (9) Refining process, (10) Temperature control process, (11) Filling process, (12) Cooling process, (13) Mold cutting process, (14) Inspection, packaging process, and (15) Aging process. Most of the processes are batch-type, and it is said that it takes 2 to 3 days from (5) blending process to (14) inspection and packaging process. On the other hand, as will be described later, in the present invention, even chocolate can be produced in just a few minutes.

A method of manufacturing a ground processed food material of cacao and / or cacao processed product of the present invention is characterized in that the method comprises a step of grinding cacao and / or cacao processed product with an extruder, and a step of dispersing and mixing a mixture of the cacao and / or cacao processed product that have been subjected to the grinding process processed product and the heat resistance imparting agent using the extruder. Conventionally, grinding was performed using a dedicated device called a grinder, but in the present invention, an extruder is used to perform the grinding process from the viewpoint of shortening manufacturing time and maintaining hygiene. Through the grinding process, cacao nibs contain about 55% fat (referred to as cocoa butter), so cacao mass in a mushy state can be obtained by grinding cacao nibs.

Furthermore, in the present invention, cacao and / or processed cacao products can be heat-treated using an extruder.

In addition, in the past, although the above (7) mixing process and the above (8) pulverization process were similarly performed in a batch method using a dedicated device, in the present invention, in addition to grinding, mixing and some degree of pulverization treatment can be performed in an extruder.

In a preferred embodiment, in the heat treatment, the cylinder temperature of the extruder is preferably 100° C. to 200° C., more preferably 130° C. to 160° C., from the viewpoint of suppressing burnt odor caused by heating.

Furthermore, in a preferred embodiment of the method of manufacturing a ground processed food material of cacao and / or cacao processed product of the present invention, it is characterized in that the extruder is equipped with a screw for performing elongated flow and grind, and has 2 to 8 shafts with a multi-point feed mechanism, from the viewpoint of improving the efficiency of milling cacao nibs.

In addition, in a preferred embodiment of the method of manufacturing a ground processed food material of cacao and / or cacao processed product of the present invention, it is characterized in that the method further comprises a step of pulverizing the mixture using a wet fine grinding mill, from the viewpoint of further refining the mixture and reducing the roughness in the mouth when eaten by humans. In particular, in order to connect with an extruder and ensure continuous productivity, it is preferable to use a continuous ultra-high pressure wet pulverizer rather than a batch type wet pulverizer such as a ball mill or attritor. In particular, it is desirable to use Sugino Machine Co., Ltd.'s "Starburst". Conventionally, after the mixing process (7), the pulverization process (8), the refining process (9), and the temperature control process (10) are performed in batch mode using dedicated equipment for each. However, in the present invention, these (8) pulverization process, (9) refining process, and (10) temperature control process can be achieved in a continuous manner by using a wet pulverizer together with the entire process using an extruder.

Furthermore, in a preferred embodiment of the ground processed food material of cacao and / or cacao processed product of the present invention, it is characterized in that the method further comprises a step of adding at least one of whole milk powder, saccharides, or hydrolyzate derived from vegetable raw materials into the extruder. By adding a hydrolyzate derived from vegetable raw materials, it is possible to provide a ground processed (milled) food material that is free of milk allergens.

Furthermore, the molded product of the present invention is characterized in that it is obtained by cooling and solidifying the melted cacao mass chocolate obtained by the method of the present invention.

Further, the chocolate powder of the present invention is characterized in that it is obtained by finely pulverizing the ground processed food material obtained by the method of the present invention, or obtained by finely pulverizing the molded product of the present invention.

### Example

Examples of the present invention will now be described, but the present invention is not to be construed as being limited to the following examples. Moreover, it goes without saying that changes can be made as appropriate without departing from the gist of the present invention.

### Example 1

First, FIG. 1 shows an example of the steps in the method of manufacturing a ground processed food material of cacao and / or cacao processed product according to the present invention. In FIG. 1, 1) is an example of an apparatus for coarsely pulverizing cacao nibs (cocoa, processed cacao products), and dispersing and mixing other raw materials. For 1), Nippon Coke Industries Co., Ltd.'s "Henschel Mixer" or Kawata Co., Ltd.'s "Super Mixer" can be used. 2) is an extruder, which is an example of a device that grinds cacao nibs and the like, and disperses and mixes other raw materials. For 2), a twin-screw extruder such as Nippon Steel Corporation's twin-screw extruder "TEX" and an extruder with L/D30 or more can be used. 3)-1 is a continuous ultra-high pressure wet atomization device, which is an example of a device that performs pulverization and emulsification of raw materials. 3)-1 and 3)-2 are pulverizers, which are examples of equipment for pulverizing raw materials. For 3-1), it is desirable to use Sugino Machine Co., Ltd.'s "Starburst", and for 3)-2, it is desirable to use Micropowtech Co., Ltd.'s "Air Tag Mill". 4) is a molding machine, which is an example of a device that cools, solidifies, and molds raw materials, and is not particularly limited to the manufacturer and model as long as it has a certain cooling effect, such as a tunnel freezer. In addition, in Figure 1, it is indicated that 1 is liquid state, 2 is semi-solid state, 3 is a part of the raw material recovered, 4 is the product: pellets, 5 is the product: chocolate powder, 6 is raw material input, 7 is the input machine, 8 is The main body of the crusher, 9 is a fine powder collector, 10 is a cyclone collector, 11 is a filter tank, 12 is a filter blowing air supply, 13 is an induced blower (exhaust fan), and 14 is an exhaust (outdoor), respectively.

In the present invention, for example, although the apparatus of 2) can be used to obtain a ground processed food material of cacao and / or cacao processed product, a coarse grinding step may be performed as a preliminary step. That is, the process using the apparatus of 1) may be performed.

In addition, after obtaining the ground processed food material of cacao and / or cacao processed product using the apparatus of 2), in order to obtain smooth and high-quality chocolate, the liquid ground processed food material can be used as a raw material, and the apparatus of 3)-1 may be used to further refine the non-oil components in the raw material. In addition, in the process using the apparatus of 3)-1, it becomes possible to disperse the oil and fat fraction more uniformly, and it becomes possible to obtain a plasticized liquid. Thereafter, the raw material can be cooled, solidified, and molded using the apparatus 4).

In addition, after obtaining the ground processed food material of cacao and / or cacao processed product using the apparatus of 2), further, for example, in order to obtain chocolate powder, the semi-solid state of the ground processed food material can be used as a raw material, and the raw material may be pulverized using the apparatus of 3)-2. Moreover, in the past, although it was thought that it was very difficult to powderize chocolate due to the problem of melting due to heat, in the present invention, it is possible to improve the heat resistance of the cacao mixture by using a heat resistance imparting agent. Furthermore, since it does not melt even when heated, it has been possible to turn it into powder, which was previously considered difficult.

Moreover, in this example, cacao nibs were extruded using a twin-screw extruder at a cylinder temperature of 130°C, and then a milled food material as an extrudate was obtained. Note that the ground processed food material can be adjusted to a liquid state or semi-solid state by adjusting the amount of raw materials other than cacao nibs added.

As described above, according to the present invention, one of the features is that each step of (5) blending process, (6) grinding process, (7) mixing process, (8) pulverization process, (9) refining process, and (10) temperature control process in the prior art can be completed immediately by steps 2) to 3) in FIG. 1, and if necessary, steps 1) to 3). In addition, the conventional processes from (5) blending process, (6) grinding process, (7) mixing process, (8) atomization process, (9) refining process, and finally (10) temperature control process are batch-type. However, according to the manufacturing method of the present invention, one of the characteristics is that it is also a "continuous type", and the devices 1) to 3) are connected by closed piping, which is sanitary and it can be said that there is no risk of contamination. In the present invention, complete disassembly and cleaning is also possible if necessary. In addition, the equipment size for steps 1) to 3) can be operated with extremely less power than the equipment used in steps (5) to (10) in the conventional method. Additionally, the size of the device is about 1/10 or less compared to existing method devices with the same capacity. Therefore, the present invention can be operated even in a narrow space.

### Example 2

Next, using the apparatus described in Example 1 and the like, a ground processed food material was obtained using cacao nibs as a cacao and / or a cacao processed product. Specifically, a ground processed (milled) food material was obtained using the extruder 2) in FIG. Additionally, the average particle size of the non-oil and fat components in the ground processed food material was investigated. The manufacturing conditions were the same as in Example 1.

From the micrographs and the results of the measurements below, it was found that the average particle size of the ground processed food material of the present invention was 100 to 300 pm. The average particle diameter was measured using a laser diffraction particle size distribution measurement method using the following equipment.

### <Measuring equipment>

HORIBA, Ltd. "Laser Scattering Particle Size Distribution Analyzer LA-960"

### <Solvent used>

### 45°C, isopropanol (IPA)

### Example 3

Next, the average particle size of the ground processed food material obtained by pulverizing the extruder-processed cacao nib food material of Example 2 using a wet pulverizer was examined. As a result, it was found that the average particle size of the non-oil / fat components in the ground processed food material of the present invention was in the range of 2.26 to 13.24 pm, and the average particle size was approximately 5.7 pm. The average particle diameter was measured using a laser diffraction particle size distribution measurement method using the following equipment.

### <Measuring equipment>

HORIBA, Ltd. "Laser Scattering Particle Size Distribution Analyzer LA-960"

### <Solvent used>

### 45°C, isopropanol (IPA)

FIG. 2 is a diagram showing a microscopic photographed image (140 x magnification) of a ground processed food material (those of finely pulverized after extruder processing) in one embodiment of the present invention. Moreover, FIG. 3 is a diagram showing a microscope photographed image (1200 x magnification) of the ground processed food material (those of finely pulverized after extruder processing) in one embodiment of the present invention. Moreover, FIG. 4 is a diagram showing a microscope photographed image (1200 x magnification) of a commercially available chocolate product.

The particle size of the non-fat components contained in normal cacao mass is said to be 20 pm or more, and as shown in FIG. 4, it can be seen that the non-fat components contain quite coarse and huge particles. On the other hand, in the present invention, as shown in FIGS. 2 and 3, the particle size of the non-oil and fat material that deteriorates the texture of the mouth is very fine, and as a result, it can be seen that the advantageous effect of having a good texture on the tongue is achieved. Furthermore, from the results shown in FIGS. 2 and 3, it was found that oil (cocoa butter) was dispersed in the cocoa mass in the form of fine oil droplets, and as a result, an effect of being excellent in solubility in the mouth was achieved.

### Example 4

Next, cocoa mass, chocolate, and chocolate powder were actually produced using the method of the present invention. Moreover, note that cacao mass is usually obtained by grinding cacao beans, contains oil and fat, and is in the form of a paste. Chocolate can be obtained by adding sugar, powdered milk, cocoa butter, etc. to the cocoa mass. Specifically, cacao mass or chocolate was produced according to the method described in Example 1 (steps 1) → 2) → 3)-1 → 4) in FIG. 1). Further, chocolate powder was manufactured according to the method described in Example 1 (steps 1) → 2) → 3)-2 in FIG. 1). General bacteria contained in the cocoa mass and chocolate powder according to the present invention thus produced were investigated.

Table 1 shows the proportions of general bacteria, etc., contained in the cacao mass, chocolate powder according to the present invention, and comparative commercially available chocolates and soft drinks.

**[Table 1]**

| Product | Coliform bacteria | General bacteria | Heat resistant bacteria | Mold |
|---|---|---|---|---|
| Cocoa mass of the present invention | Negative | 0 | 0 | 0 |
| Chocolate powder of the present invention | Negative | 0 | 0 | 0 |
| Bitter chocolate manufactured by company A (standard value) | Negative | 5000 or less | - | - |
| Cocoa powder manufactured by company B (standard value) | Negative | 3000 or less | - | 50 or less |
| Soft drinks (most stringent for food use) | Negative | 100 or less | | |

As a result shown in Table 1, it has been found that one of the characteristics of the "cocoa mass" and "chocolate" produced by the novel continuous chocolate production method of the present invention is that it is "sterilized", which was not possible with conventional chocolate, cacao mass, and cocoa powder. As a result, it can be seen that the present invention can be used for new applications (high moisture content products) that require extremely strict bacterial count control, which was considered taboo in the past.

### Example 5

Next, the particle size of the chocolate produced according to the present invention was also investigated according to the procedure of the above-mentioned Examples. FIG. 5 is a diagram showing a microscope photographed image (30x magnification) of chocolate using a ground processed food material according to an embodiment of the present invention. Moreover, FIG. 6 is a diagram showing a photograph of chocolate using the ground processed food material in one embodiment of the present invention. It can be seen that the oil is well dispersed, giving it a very glossy appearance. The physical definition of high-quality cacao mass chocolate is that it has a pleasant texture and is smooth, and that it retains the good aroma derived from the cacao beans and removes bad aromas. From the above results, the "cocoa mass" and "chocolate" produced by the novel continuous chocolate production method of the present invention have an average particle size of the non-fat components of the composition other than cocoa bean fat (cocoa butter) of 30 pm or less. In the samples of the new manufacturing method shown in Figure 5, most of them are 10 pm or less, demonstrating that it is possible to create so-called "smoother" products than the conventional method.

### Example 6

Next, an attempt was made to produce allergen-free chocolate by using a vegetable hydrolyzate instead of whole milk powder in accordance with the procedure of the above-mentioned example. As the vegetable hydrolyzate, a navy bean (or a white bean (Phaseolus vulgaris)) hydrolyzate and a rice hydrolyzate were used for chocolate applications. As a result, it was found that it is possible to produce allergen-free milk chocolate.

As described above, according to the present invention, it was found that the product of the present invention has many advantages as follows: 1. Compared to existing manufacturing methods, it is possible to manufacture in an extremely short time, at low cost, and in a sanitary manner. In other words, although it takes about 2 to 3 days to finish from the raw material roasted cacao nibs to the chocolate before cooling and solidifying, and each process is batch-type in the existing manufacturing method, with this manufacturing method, it is possible to create molten chocolate before cooling and solidifying in just a few minutes, and it is done in a continuous manner. 2. In addition, by using vegetable hydrolyzate instead of whole milk powder, it is possible to produce allergen-free chocolate. In other words, by continuously supplying vegetable hydrolyzate in a closed continuous manufacturing process, allergen contamination can be avoided physically. 3. Ordinary chocolate and cacao mass contain a large amount of general viable bacteria, but the products according to the present invention are sterilized. Specifically, the number of general viable bacteria contained in ordinary cacao mass or chocolate is 3,000 to tens of thousands of viable bacteria / g, while the content of the product of the present invention is 0 to 300 viable bacteria / g.

In addition, according to the present invention, since the particle size of the non-oil/fat component is very fine, for example, in the case of a molded product with a mass of 50 g (dimensions: 100 mm x 150 mm x approximately 3 mm), although the time required for complete dissolution of normal cacao mass is 40 seconds, the product of the present invention has the characteristic that it dissolves in 35 seconds.

### Industrial applicability

Compared to conventional techniques, it is possible to provide sterilized food materials very simply and can be applied in a wide range of fields.

### Explanation of references

1 liquid state
2 Semi-solid state
3 Collecting some raw materials
4 Product: Pellets
5 Product: Chocolate powder
6 Inputting raw materials
7 Loading machine
8 Crusher main body
9 Fine powder collector
10 Cyclone recovery
11 Filter tank
12 Filter dusting air supply
13 Induction blower (exhaust fan)
14 Exhaust (outdoor)

## Claims

1. A ground processed food material of cacao and / or cacao processed product, **characterized in that** the material is an extruder-processed ground product of cacao and / or cacao processed product, wherein the content of general bacteria contained in the extruder-processed ground product is 3,000/g or less.

2. The ground processed food material of cacao and / or cacao processed product according to claim 1, wherein the average particle size of the non-oil and fat components of the extruder processed ground product is in the range of 100 to 300 pm.

3. The ground processed food material of cacao and / or cacao processed product according to claim 1, wherein the cacao and / or cacao processed product is at least one of cacao nibs, saccharides, powdered milk, plant-based milk powder substitutes, and vegetable oils and fats.

4. The ground processed food material of cacao and / or cacao processed product according to claim 1, wherein the extruder-processed ground product of cacao and / or cacao processed product is liquid state or semi-solid state.

5. A food or drink product **characterized by** comprising the ground processed food material of cacao and / or cacao processed product according to any one of claims 1 to 4.

6. A method of manufacturing a ground processed food material of cacao and / or cacao processed product, **characterized in that** the method comprises a step of grinding cacao and / or cacao processed product with an extruder, and
a step of mixing the cacao and / or cacao processed product that have been subjected to the grinding process with saccharides, powdered milk, plant-based milk powder substitutes, and vegetable oils and fats by dispersing them in the extruder.

7. The method according to claim 6, wherein the extruder is equipped with a screw for performing elongated flow and grind, and has 2 to 8 shafts with a multi-point feed mechanism.

8. The method according to claim 6 or 7, wherein the method further comprises a step of pulverizing the mixture using a wet fine grinding mill.

9. The method according to any one of claims 6 to 8, wherein the method further comprises a step of adding at least one of whole milk powder, saccharides, or hydrolyzate derived from vegetable raw materials into the extruder.

10. A molded product obtained by cooling and solidifying the melted cacao mass chocolate obtained by the method according to any one of claims 6 to 9.

11. Chocolate powder obtained by finely pulverizing the ground processed food material obtained by the method according to any one of claims 6 to 9, or obtained by finely pulverizing the molded product according to claim 10.
